Europäisches Patentamt

European Patent Office

Office européen des brevets

(19)

(11) Veröffentlichungsnummer: **0 002 195**
**B1**

(12) **EUROPÄISCHE PATENTSCHRIFT**

(21) Anmeldenummer: 78101312.3

(22) Anmeldetag: 04.11.78

(51) Int. Cl.³: **B 30 B  9/30,**  B 29 H  3/00

(54) Presse zum Verpressen von Krümeln eines elastomeren Materials zu Ballen

(30) Priorität: 26.11.77 DE 2752834

(43) Veröffentlichungstag der Anmeldung:
13.06.79 Patentblatt 79/12

(45) Bekanntmachung des Hinweises auf die Patenterteilung:
12.11.80 Patentblatt 80/23

(84) Benannte Vertragsstaaten:
FR GB NL

(56) Entgegenhaltungen:
DE - A - 1 577 239
DE - C - 881 735
FR - A - 2 058 276
FR - A - 2 312 365
FR - A - 630 939
US - A - 2 536 387

(73) Patentinhaber: CHEMISCHE WERKE HÜLS AG
Postfach 1320
D - 4370 Marl 1 (DE)

(72) Erfinder: Klos Julius
Christophorus Weg 15
D - 4350 Recklinghausén (DE)
Franz, Gotthard
Schwabenstrasse 37
D - 4370 Marl (DE)

Courier Press, Leamington Spa, England.

EP 0 002 195 B1

Press zum Verpressen von Krümeln eines elastomeren Materials zu Ballen

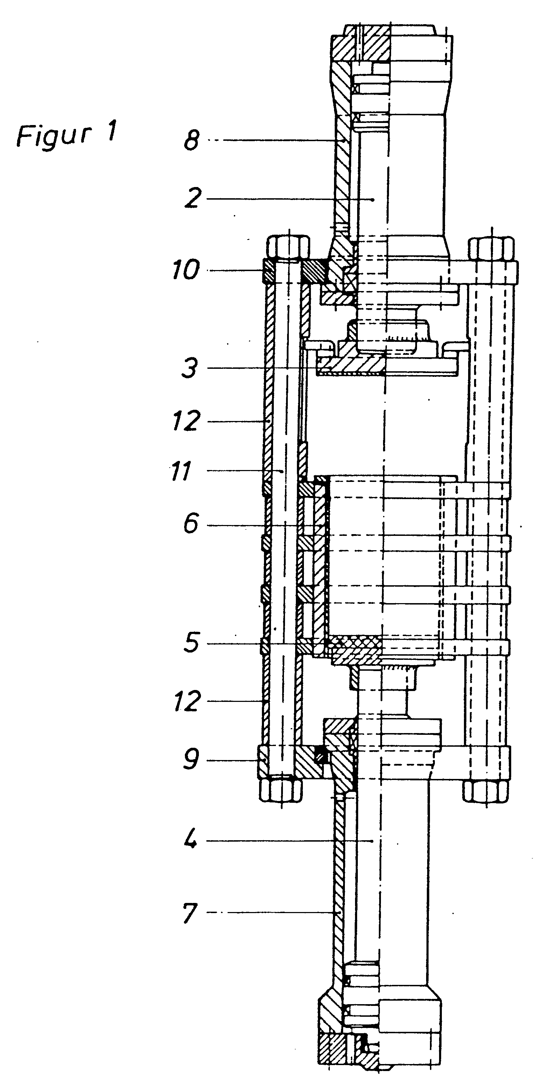

Die bekannten Pressen zum Verpressen von Flocken bzw. Krümeln eines elastomeren Materials zu einem Ballen weisen einen Preßraum auf, der einerseits unten durch einen mittels eines Hydraulik-Kolbens auf- und abwärts verschiebbaren Preßstempel verschlossen ist und andererseits oben durch einen mittels eines Hydraulik-Kolbens querverschiebbaren Verschlußschieber abgedeckt wird. Der Verschlußschieber dient zugleich als Ballenausstoßschieber nach Beendigung eines Preßvorganges (vgl. DE—PS 1 162 545, Figur 1 und FR—PS 2 058 276, Figuren 1 bis 5). Die Arbeitsweise einer solchen Presse ist folgende:

Über der Ballenpresse ist eine Dosierwaage angeordnet, die mit der Ballenpresse durch einen Trichter verbunden ist. Der Trichter ragt in einen Durchgang der Quertraverse hinein. Zu Beginn eines Arbeitstaktes steht der Verschlußschieber außerhalb der Presse in Ausgangsstellung. Die seitlich am Verschlußschieber angebrachten Leitbleche dienen zur Führung der Flocken bzw. Krümel in den Preßschacht. Dieselbe Aufgabe hat eine durch einen Druckluft- bzw. Hydraulik-Kolben betätigte Klappe, die somit verhindern soll, daß die Krümel auf dem Wege von der Waage in den Preßraum nach vorn herausfallen. Nach dem Einfüllen der Flocken bzw. Krümel in den Preßraum wird die Klappe durch einen Kolben angehoben; der Verschlußschieber wird durch einen weiteren Kolben über den Preßraum gefahren und durch Keilflächen an der Quertraverse und am Verschlußschieber verkeilt.

Der Preßstempel wird sodann durch den Hydraulik-Kolben aufwärts bewegt; der Preßvorgang beginnt.

Während des Preßvorganges stützt sich der Verschlußschieber über die Keilflächen an der Quertraverse ab.

Nach Beendigung des Preßvorganges muß der Verschlußschieber druckentlastet werden, d. h. der Preßstempel muß kurz abwärts bewegt werden, damit der Verschlußschieber in seine Ausgangsstellung zurückfahren kann. Die Klappe bleibt noch oben.

Zum Ausstoßen des Ballens wird der Preßstempel bis zum Anschlag in seine obere Endstellung gefahren, damit die Unterseite des Ballens mit dem oberen Rand des Preßraumes bündig liegt. Jetzt erst kann der Verschlußschieber durch Vorfahren seine Aufgabe als Ballenausstoßschieber erfüllen.

Danach fahren Verschlußschieber, Klappe und Preßstempel in ihre Ausgangsstellung zurück.

Der nächste Preßvorgang kann beginnen.

Die Ballenpresse gemäß der FR—PS 2 058 276 unterscheidet sich von der Ballenpresse gemäß der DE—PS 1 162 545 dadurch, daß der Verschlußschieber 14, Figuren 1 bis 5 (FR—PS 2 058 276), nicht in Führungs-33 und Gegenschienen 10, Figur 4 (DE—PS 1 162 545), sondern in vier mit einseitigem Spurkranz versehenen Rädern 26 und 27 in Winkeln 28 und 29, Figur 6 (FR—PS 2 058 276), gelagert und geführt ist.

Einen weiteren Unterschied zeigt die Zuführung des elastomeren Materials.

Während bei den Ballenpresse gemäß der DE—PS 1 162 545 eine Dosierwaage in der Vertikalachse der Presse angeordnet ist, und das zu verpressende Material mittels eines Trichters, der in einen Durchgang in die Quertraverse hineinragt, dem Preßraum zugeführt wird, ist bei der Ballenpresse gemäß der FR—PS 2 058 276 die Dosierwaage außermittig angeordnet. Das elastomere Material wird durch eine ein- und ausklappbare Schütte (Rinne) dem Preßraum zugeführt. Darüber hinaus weist die Presse eine Vorrichtung auf, die ein Evakuieren und Belüften des Preßraumes während eines Arbeitstaktes gestattet.

Im übrigen ist die Arbeitsweise der Ballenpresse gemäß der FR—PS 2 058 276, was den reinen Preßvorgang und das Ausstoßen des Ballens betrifft, identisch mit der Arbeitsweise der Presse gemäß der DE—PS 1 162 545.

Bedingt durch die Konstruction weisen Pressen des Standes der Technik folgende Nachteile auf:

Beim Schließen des Verschlußschiebers tritt infolge der Keilwirkung in der Quertraverse eine erhebliche Zug/Biege-Beanspruchung auf, die begünstigt durch den doppelten Lastwechsel während eines Preßvorganges zu vorzeitigen Brüchen führen kann. Der Zylinder des Hydraulik-Kolbens (Hauptkolben) ist in der Rahmenkonstruktion, die den Preßraum bildet, in Pratzen aufgehängt, die infolge der wechselnden Scherbeanspruchung vorzeitig reißen können.

Das zu verpressende Material fällt durch den Trichter aus der Waage durch die Öffnung in der Quertraverse in den Preßraum. Dadurch, daß die im Preßraum befindliche Luft durch das Material schlagartig verdrängt wird, entsteht ein aufwärts gerichteter Luftstrom, der Feinmaterial mitreißt (Krümelflug) und dieses durch Undichtigkeiten zwischen den seitlich des Schiebers befestigten Leitblechen und der Klappe herauswirft.

Die vorliegende Erfindung stellt sich die Aufgabe, die Nachteile zu beseitigen, d. h. sie bezweckt einmal die Konstruktion einer Presse, bei der die beim Preßvorgang auftretenden Kräfte ausschließlich in reine Zugkräfte umgewandelt werden. Sie hat weiterhin die Aufgabe, zum Einfüllen des zu verpressenden Materials zwischen Dosierwaage und Preßraum eine allseits bündige Verbindung herzustellen und den bisher schlagartigen Produktfall in eine gleitende Bewegung überzuführen. Sie bezweckt weiterhin, die Zeit des Preßvorganges (Folge der Arbeitstakte) durch Einsparung von Arbeitstakten zu verkürzen (Leistungssteigerung).

In den Figuren ist ein Ausführungsbeispiel der neuen Pressen dargestellt. Es zeigt:

Figur 1 eine Presse zum Verpressen von Flocken bzw. Krümeln eines elastomeren Materials zu Ballen im Halbschnitt,

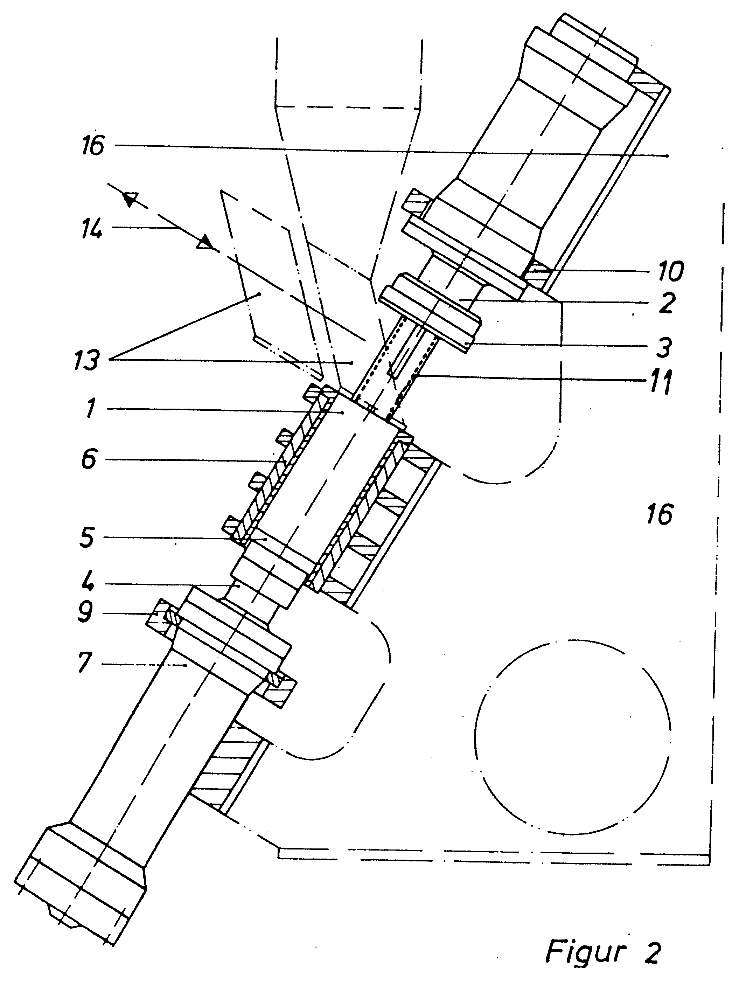

Figur 2 die Presse nach Figur 1 in Seitenansicht mit Einfülltrichter und Ständer in schematischer Darstellung und

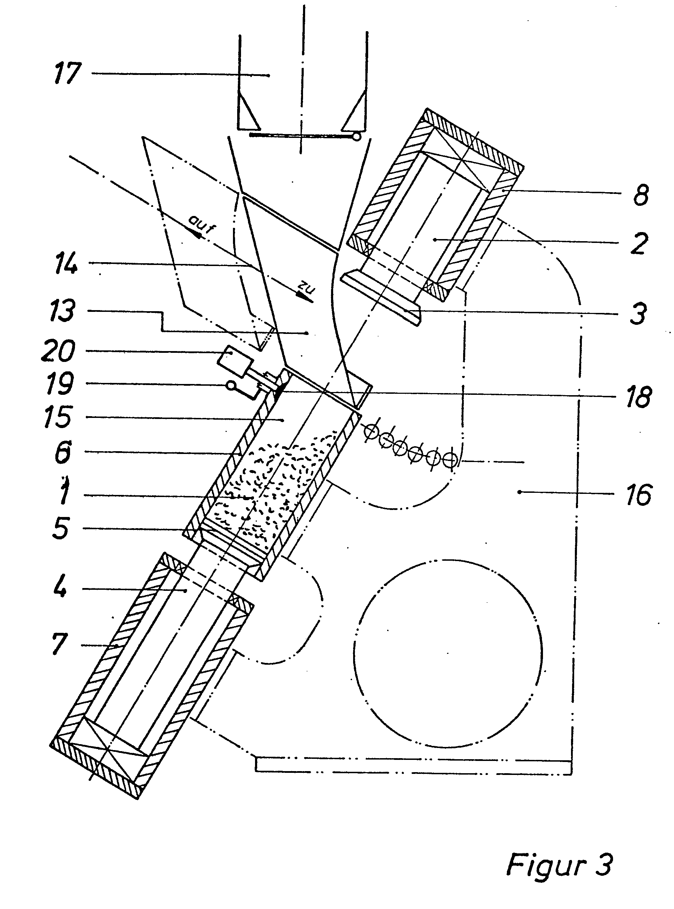

Figur 3 eine schematische Darstellung der Arbeitsweise der erfindungsgemäßen Presse.

Wie die Figuren verdeutlichen, ist anstelle des bisher üblichen, seitlich quer angeordneten Verschlußschiebers zum oberen Verschluß des Preßraumes (1) ein in gleicher Achse des Preßraumes liegender Oberkolben (2), der mit der daran befestigten Kopfplatte (3) den Preßraum verschließt, vorgesehen. Zum Verpressen des flocken- bzw. krümelartigen elastomeren Materials ist unten ebenso gleichachsial ein Unterkolben (4) vorhanden. Mit dem Kolben fest verbunden ist der Stempel (5), der mit seinen Abmaßen genau in den Preßraum (1) eingepaßt ist und durch den Kolben (4) auf- und abwärts bewegt werden kann. Um eine Schließkraft bei gleichem hydraulischen Druck zu erreichen, ist der Durchmesser des Oberkolbens (2) größer als der Durchmesser des Unterkolbens (4) gewählt. Der den Preßraum umkleidende Preßkasten (6) besteht aus einer starken Rahmenkonstruktion. Unterkolben (4) mit Zylinder (7) wird in der Untertraverse (9) gehalten und geführt. Die gleiche Aufgabe hat die Obertraverse (10), die den Oberkolben (2) mit dem Zylinder (8) aufnimmt und führt. Die Untertraverse (9), der Preßkasten (6) und die Obertraverse (10) sind auf mindestens zwei Führungsstangen (11) aufgefädelt und fest miteinander verbunden. Distanzbüchsen (12) entsprechender Länge gewährleisten einen spiellosen Verband der 3 Bauteile.

Damit ist gewährleistet, daß alle Druckkräfte, die nur in der Längsachse auftreten können, als Zugkräfte von den Führungsstangen (11) aufgenommen werden.

Aufgabe der Erfindung ist es weiterhin, den Fall des zu verpressenden Materials zu bremsen und in eine gleitende Bewegung überzuführen. Gleichzeitig soll erreicht werden, daß mit der Dosierwaage und dem Preßraum (1) eine dichte, allseits bündige Verbindung hergestellt wird. Aus diesem Grunde tritt an die Stelle eines Trichters, der durch eine Öffnung in die Quertraverse ragt, der Trichter (13), der auf einer Führung (14) quer zur Pressenachse durch einen pneumatischen oder hydraulischen Kolben "auf" und "zu" gefahren werden kann.

Um den starken Fall zu bremsen, wird das Produkt beim Einfüllen in den Preßraum (1) umgelenkt. Erfindungsgemäß bedingt das vorzugsweise eine schräge Aufstellung der Presse (Schrägständerpresse), z.B. 60° aus der Horizontalen. Dafür ist eine starke Stahlkonstruktion (16) notwendig, in der die gesamte Presse gehalten ist. Der Preßkasten (6) ist als Festpunkt auf der Ständerkonstruktion befestigt, während der Oberzylinder (8) und der Unterzylinder (7) derart aufliegen, daß auftretende Zugkräfte in jedem Fall von dem Führungsbolzen (11) aufgenommen werden.

Es wäre auch eine senkrechte Aufstellung der Presse denkbar, sofern man wegen der schrägen Anordnung des Trichters (13) eine hohe Bauweise in Kauf nimmt.

In jedem Fall bedingt die schräge Lage des Trichters (13) zur Achse der Waage (17) ein Abbremsen des nach dem plötzlichen Öffnen der Waagenklappe als leicht verbundener Klumpen aus der Waage fallenden Produktes. Es ist damit gewährleistet, daß das von der Struktur her elastische Material in einer gleitenden Bewegung in den Preßraum geführt wird.

Der Erfindung liegt schließlich die Aufgabe zugrunde, die Zeit des gesamten Preßvorganges durch Einsparung an Arbeitstakten zu verkürzen. Während bei den bisher bekannten Pressenkonstruktionen nach dem Pressen der Preßstempel kurz zurückgefahren werden muß, um den unter Preßdruck stehenden Verschlußschieber zu entlasten, entfällt dieser Arbeitstakt bei der erfindungsgemäßen Presse, da der Verschluß durch den Oberkolben (2) in gleicher Achse wie der Unterkollen (4) liegt. Somit ist es lediglich notwendig, den Oberkolben (2) vom Preßdruck zu entlasten. Automatisch folgt der unter Druck stehende Unterkolben (4) bis zum oberen Anschlag nach und hebt den Ballen aus dem Preßraum (1) heraus.

Zwangsweise entfällt damit auch der Arbeitstakt des Lüftens des Preßstempels.

Die durch die Schräglage der Presse sich ergebende Lage des eingefüllten Produktes ergibt in der oberen Ecke des Preßraumes (1) eine produktfreie Zone (15), die sich für den Einbau einer Vakuumvorrichtung eignet.

Durch die schnelle Evakuierung dieses Raumes in der Anfangsphase des Preßvorganges — Aufwärtsbewegung des Stempels (5) — läßt sich der gesamte Arbeitstakt dadurch verkürzen, daß sich die bei der bisherigen Pressenkonstruktion benötigte Zeit, die der Preßstempel unter Druck stehen muß, um der Luft im Material Gelegenheit zum Entweichen zu geben, erübrigt.

Nach Erreichen der größtmöglichen Materialverdichtung wird der Oberkolben (2) entlastet und fährt in seine Ausgangsstellung zurück. Gleichzeitig hebt Unterkolben (4) den Ballen aus dem Preßraum (1). Der Trichter (13) fährt zu und stößt damit den auf dem Stempel (5) liegenden Ballen aus der Presse. Nachdem der Unterkolben (4) seine untere Endstellung erreicht hat, kann der nächste Preßvorgang beginnen.

Ein Ausführungsbeispiel einer Schrägständerpresse mit Oberkolbenverschluß ist schematisch nochmals in Figur 3 dargestellt.

Die Arbeitsweise ist wie folgt: Oberkolben (2) befindet sich in seiner obersten, Unterkolben (4) in seiner untersten Stellung, Trichter (13) in Stellung "zu". Nach Einfüllen des Produktes fährt Trichter (13) in Stellung "auf", Oberkolben (2) bewegt sich gleichzeitig nach unten und verschließt dicht den Preßraum (1). Zum gleichen Schaltzeitpunkt beginnt Unterkolben (4) sich nach oben zu bewegen; der Verdichtungsvorgang beginnt. Solange das zu verpressende Material den produktfreien Raum (15) noch nicht aufgefüllt hat (2 bis 3 sec.), wird der Preßraum (1) über das Vakuumventil (18), welches den Durchgang zur ständig unter Vakuum stehenden Leitung (19) freigibt, evakuiert.

Das Vakuumventil wird zeitlich durch den Pneumatik- bzw. Hydraulik-Kolben (20) "auf" und "zu" gesteuert.

Nachdem der Unterkolben das zu verpressende Material maximal verdichtet hat — druck-, weg- oder zeitabhängig, je nach Wahl des hydraulischen Steuersystems-, schaltet Oberkolben (2) auf Rücklauf und gibt den Pressenraum (1) frei.

Da Unterkolben (4) weiterhin unter Druck steht, hebt er den gepreßten Ballen gleichzeitig aus dem Preßraum heraus, so weit, bis der Stempel (5) mit der Oberkante des Preßkastens (6) eine Ebene bildet. Jetzt fährt Trichter (13) zu. Er schiebt dabei den Ballen von dem sich noch im oberen Anschlag befindlichen Stempel (5) ab und verbindet gleichzeitig fugenlos den Schacht der Waage (17) mit dem Preßraum (1).

Durch eine entsprechende hydraulische Schaltung ist dafür Sorge getragen, daß der Oberkolben (2) beim Herausheben des Ballens immer dem Unterkolben (4) voreilt.

Nachdem der Unterkolben (4) in seine untere Endstellung zurückgegangen ist, ist die Presse für den nächsten Arbeitstakt frei.

## Patentansprüche

1. Presse zum Herstellen von Ballen aus elastomeren Krümeln, mit einem über Säulen (11) mit einer Traverse (10) verbundenen Preßraum, in dem ein Preßstempel (5) auf- und abwärts verschiebar ist, einem über dem Preßraum schräg angeordneten Einfülltrichter (13), einer eine Kolben-Zylinder-Einheit (2,8) enthaltenden Schließvorrichtung zum zeitweiligen Verschließen des Preßraumes und einer Ausstoßvorrichtung für die gepreßten Ballen, dadurch gekennzeichnet, daß der schräg zur Achse des Preßraumes (1) angeordnete und quer zur Achse des Preßraumes (1) bewegbare Einfülltrichter (13) mit dem Preßraum (1) praktisch fugenlos verbindbar und gleichzeitig als die Ausstoßvorrichtung ausgebildet ist und der Zylinder (8) der Schließvorrichtung mit seiner Achse achsgleich mit der Achse des Preßraumes (1) an der Traverse (10) angeordnet ist.

2. Presse nach Anspruch 1, dadurch gekennzeichnet, daß im Bereich einer zu Beginn des Preßvorganges produktfreien Zone (15) des Preßraumes (1) eine Evakuiervorrichtung (18, 19, 20) vorgesehen ist.

## Claims

1. A press for making bales of elastomeric crumbs, having a press chamber, which is connected through columns (11) with a traverse (10) and in which a ram (5) can be moved upward and downward, as well as a feed hopper (13) in oblique arrangement over the press chamber, a closing device for closing the press chamber at times comprising a piston-cylinder unit (2,6), and an ejector for the pressed bales, characterized in that the feed hopper (13) arranged obliquely to the axis of the press chamber (1) and moveable transversely to the axis of the press chamber (1) can be connected with the press chamber (1) practically jointlessly and is, at the same time, designed as the ejector, and in that the cylinder (8) of the closing device is arranged at the traverse (10), the cylinder axis and the axis of the press chamber (1) being identical.

2. A press according to claim 1, characterized in that an evacuating device (18, 19, 20) is provided within an area (15) of the press chamber (1) which, at the beginning of the pressing operation, is free from product.

## Revendications

1. Presse pour fabriquer des balles de grumeaux élastomères, comprenant une cavité combinée avec une entretoise (10) par des colonnes (11) et dans laquelle un poinçon (5) coulisse vers le haut et le bas, une trémie (13) disposée obliquement au-dessus de la cavité, un dispositif de fermeture composé d'une unité piston-cylindre (2,8) pour fermer temporairement la cavité, ainsi qu'un mécanisme d'éjection des balles moulées, caractérisée par le fait que la trémie de chargement (13) amovible transversalement par rapport à l'axe de la cavité (1) et disposée obliquement par rapport au même axe (1) est pratiquement assemblable sans joints à la cavité (1). La trémie constitue en même temps le mécanisme d'éjection. Une autre caractéristique de la presse est que le cylindre (8) du dispositif de fermeture est adapté à la cavité (10), son axe étant identique à celui de la cavité (1).

2. Presse selon revendication 1, caractérisée par le fait qu'une installation d'évacuation (18, 19, 20) est prévue dans une zone (15) de la cavité (1). Au début de l'opération de moulage cette zone reste libre de produit.

0 002 195

Figur 1

Figur 2

*Figur 3*